# EUROPEAN PATENT APPLICATION

(11) **EP 3 168 431 A1**
(43) Date of publication of application: **17.05.2017**
(21) Application number: 15194618.3
(22) Date of filing: 13.11.2015
(51) Int. Cl.: F01D 25/12, F02C 7/18, F02C 9/18

(54) **HEAT EXCHANGERS AND COOLING METHODS FOR GAS TURBINES**

(71) Applicant: General Electric Technology GmbH, 5400 Baden (CH)
(72) Inventor: Simon-Delgado, Carlos, 5400 Baden (CH); Taheny, Oliver Joseph, 8046 Zurich (CH); Olmes, Sven, 5210 Windisch (CH); Alberti, Luca, 5443 Niederrohrdorf (CH); Jemora, Daniel, 5213 Villnachern (CH)
(74) Representative: Bernotti, Andrea

(57) **Abstract**

A gas turbine (10) comprising a compressor (20), a combustor (30) downstream of the compressor, a turbine (40) downstream of the combustor, a heat exchanger (70), a first cooling fluid system (50) and a second cooling fluid system (60) is described. The first cooling fluid system and the second cooling fluid system are each configured and arranged to extract a cooling fluid from the compressor and to cool a part of the gas turbine using the cooling fluid. The first cooling fluid system and the second cooling fluid system each extend from the compressor to the heat exchanger and from the heat exchanger to the part of the gas turbine to be cooled. The heat exchanger is configured and arranged to exchange heat from the cooling fluid in the second cooling fluid system to the cooling fluid in the first cooling fluid system. A rotor cover (100) with a heat exchanger and methods of operation are also described.

## Description

### TECHNICAL FIELD

The present disclosure relates to gas turbines, and particularly to gas turbines with heat exchangers.

### BACKGROUND OF THE INVENTION

In today's gas turbines, various parts are subject to extreme temperatures, particularly within the combustor and the turbine, and as a result providing effective cooling systems is critical. To help with cooling, external cooling units are used, but it has been appreciated that changes in design could reduce the need for external cooling units.

### SUMMARY OF THE INVENTION

The invention is defined in the appended independent claims to which reference should now be made. Advantageous features of the invention are set forth in the dependent claims.

A first aspect provides a gas turbine comprising a compressor, a combustor downstream of the compressor, a turbine downstream of the combustor, a heat exchanger, a first cooling fluid system and a second cooling fluid system, the first cooling fluid system and the second cooling fluid system each being configured and arranged to extract a cooling fluid from the compressor and to cool a part of the gas turbine using the cooling fluid, the first cooling fluid system and the second cooling fluid system each extending from the compressor to the heat exchanger and from the heat exchanger to the part of the gas turbine to be cooled, and wherein the heat exchanger is configured and arranged to exchange heat from the cooling fluid in the second cooling fluid system to the cooling fluid in the first cooling fluid system.

This can allow a high pressure (and high temperature) fluid in a first cooling fluid system to be cooled using a low pressure (i.e. lower pressure and lower temperature) fluid in a second cooling fluid system. This can provide high pressure cooling fluid at lower temperatures than in current designs, which allows for improved cooling. The temperature of the low pressure cooling fluid is increased in temperature as a result, but the temperature of the low pressure cooling fluid is generally less critical and some increase in temperature (and resulting reduction of cooling) is often acceptable. Mixing of high and low pressure flows, and the associated loss of high pressure cooling fluid, can also be avoided.

This can also reduce or remove the need for supplemental cooling systems (heat exchangers), resulting in simplification, space requirement reductions and/or cost reductions.

Preferably, at least one of the first cooling fluid system and the second cooling fluid system is divided into two parts upstream of the heat exchanger, with one of the parts configured and arranged to pass cooling fluid through the heat exchanger and the other of the parts configured and arranged to bypass cooling fluid past the heat exchanger. Preferably, the two parts recombine downstream of the heat exchanger. Preferably, at least one of the first cooling fluid system and the second cooling fluid system is divided downstream of the heat exchanger. These options can provide greater flexibility in the distribution and use of cooling fluid.

Preferably, the heat exchanger is in the gas turbine. This can save space and can allow the heat transfer between the high pressure and low pressure fluid in the heat exchanger to stay within the gas turbine cycle, which can minimise heat loss. For example, the heat exchanger can be in a structural part or component of the gas turbine, such as a rotor cover, a compressor vane housing/carrier, a turbine vane carrier, a turbine housing, a compressor housing or a combustor carrier.

A second aspect provides a rotor cover for a gas turbine, the rotor cover comprising a heat exchanger, the heat exchanger comprising a first channel for a first cooling fluid flow and a second channel for a second cooling fluid flow and being configured and arranged to transfer heat from the second cooling fluid flow to the first cooling fluid flow. This can provide a compact design by providing the heat exchanger within an existing component, and can lead to saving space.

A third aspect provides a gas turbine according as described above comprising a rotor cover as described above.

A fourth aspect provides a method of operating a gas turbine comprising a compressor, a combustor downstream of the compressor, a turbine downstream of the combustor, a heat exchanger, a first cooling fluid system and a second cooling fluid system, the first cooling fluid system and the second cooling fluid system each being configured and arranged to extract a cooling fluid from the compressor and to cool a part of the gas turbine using the cooling fluid, the first cooling fluid system and the second cooling fluid system each extending from the compressor to the heat exchanger and from the heat exchanger to the part of the gas turbine to be cooled, and wherein the heat exchanger is configured and arranged to exchange heat from the cooling fluid in the second cooling fluid system to the cooling fluid in the first cooling fluid system, the method comprising the steps of extracting a first flow of cooling fluid from a first point in the compressor and feeding at least part of the first flow through the first cooling fluid system to the heat exchanger, extracting a second flow of cooling fluid from a second point in the compressor and feeding at least part of the second flow through the second cooling fluid system to the heat exchanger, the second flow being at a higher temperature than the first flow, cooling the second flow in the heat exchanger using the first flow, and feeding the first flow and the second flow to a part or parts of the gas turbine.

Preferably, at least one of the first cooling fluid system and the second cooling fluid system is divided into two parts upstream of the heat exchanger, and a part of the cooling fluid is fed through the heat exchanger and another part of the cooling fluid bypasses the heat exchanger. This can provide the option of changing relative flows of the two cooling fluid flows through the heat exchanger, and can therefore allow for variation in the temperature of the cooling fluid flows, resulting in variation in the cooling of gas turbine components.

Preferably, the cooling fluid recombines downstream of the heat exchanger. This can provide the benefits of the heat exchanger without passing all of the flow through the heat exchanger.

Preferably, the relative cooling fluid flow in the two parts is controlled to control the temperature of the cooling fluid downstream of the heat exchanger. An example of when this can be helpful is during changes in gas turbine operation, such as start-up and shut down, for example in helping to control clearances between adjacent components.

### BRIEF DESCRIPTION OF THE DRAWINGS

An embodiment of the invention will now be described by way of example only and with reference to the accompanying drawings in which:
Figure 1 shows a diagrammatic representation of a gas turbine with a heat exchanger for exchanging heat between two cooling fluid flows in two cooling systems;
Figure 2 shows a gas turbine similar to that in Figure 1, where the entry points of the cooling fluid flows in the turbine are shown;
Figure 3 shows a gas turbine similar to that in Figure 1, where a portion of each cooling fluid flow can bypass the heat exchanger;
Figure 4 shows a gas turbine similar to that in Figure 3, where the entry points of the cooling fluid flows in the turbine and gas turbine components are shown;
Figure 5 shows a gas turbine similar to that in Figure 4, where only the high pressure cooling fluid is split;
Figure 6 shows a gas turbine similar to that in Figure 4, where only the low pressure cooling fluid is split;
Figure 7 shows a cross-section of a rotor cover with a heat exchanger;
Figure 8 is a cross-section along A-A in Figure 7, showing a possible heat exchanger arrangement in more detail; and
Figure 9 is a cross-section along A-A in Figure 7, showing another possible heat exchanger arrangement in more detail.

### DETAILED DESCRIPTION OF THE PREFERRED EMBODIMENTS

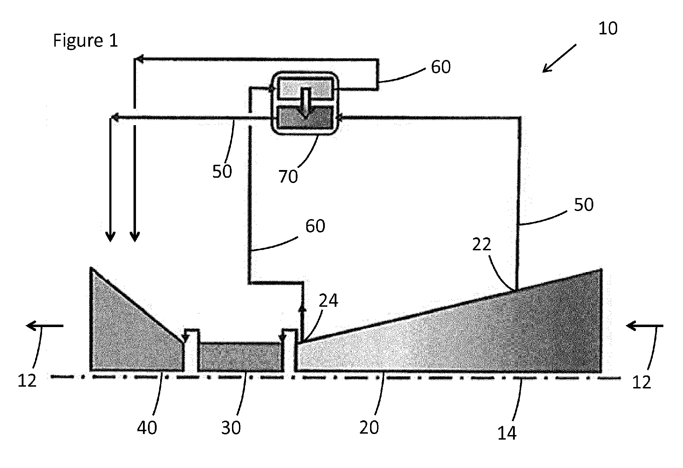

Figure 1 shows an example of a gas turbine 10 with a compressor 20, a combustor 30 downstream of the compressor 20 and a turbine 40 downstream of the combustor 30, relative to the direction of the gas turbine flow 12. At a first compressor extraction point 22 a first cooling system 50 is attached, and at a second compressor extraction point 24 a second cooling system 60 is attached. Fluid from the compressor passes into the first and second cooling systems.

The fluid extracted at the first compressor extraction point is at a lower pressure (and therefore also a lower temperature) when compared to the fluid extracted at the second compressor extraction point. The first and second cooling systems (cooling fluid systems) pass through a heat exchanger 70, where heat from the fluid in the second cooling system is transferred to the fluid in the first cooling system. The fluid from the first and second cooling systems can then be fed elsewhere in the gas turbine to cool one or more parts of the gas turbine.

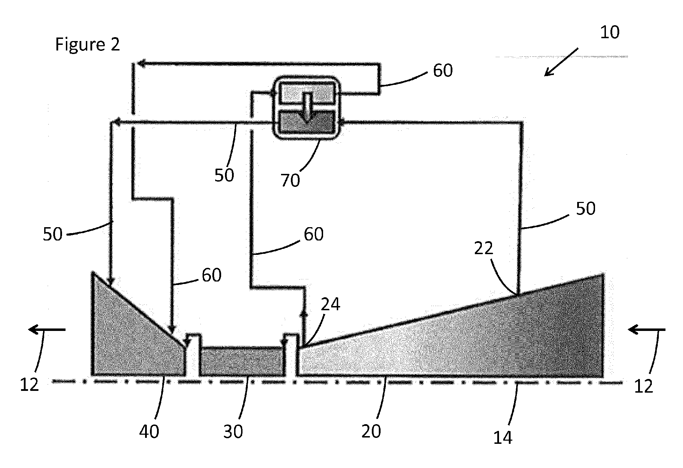

Figure 2 shows an example of the gas turbine in Figure 1, in which the first and second cooling systems 50, 60 extend to the turbine 40 to provide cooling fluid to the turbine 40. Generally, the first cooling system 50 extends to a first region of the turbine 40 and the second cooling system 60 extends to a second region of the turbine 40, where the flow 12 in the first region is at a lower pressure than in the second region.

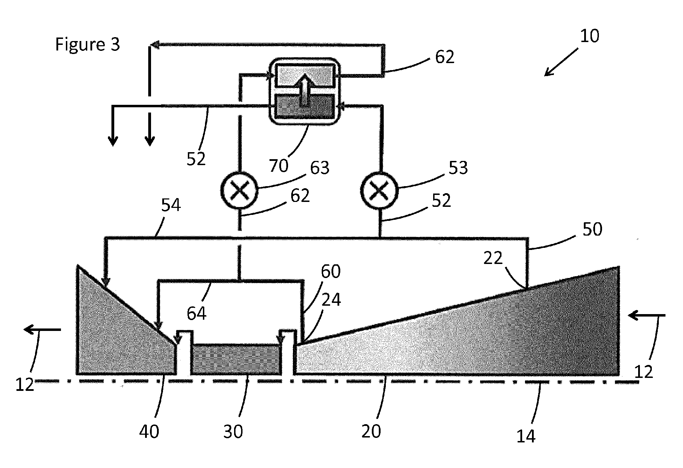

Figure 3 shows a gas turbine in which two cooling systems 50, 60 are attached to the compressor, and each system is then separated into two parts. A first part 52 of the first cooling system 50 passes through the heat exchanger 70, whereas a second part 54 of the first cooling system goes directly to the turbine, bypassing the heat exchanger. The first part 52 may comprise a control valve 53 for controlling flow through the first part 52.

Similarly, a first part 62 of the second cooling system 60 passes through the heat exchanger, and a second part 64 of the second cooling system goes directly to the turbine. The first part 62 may comprise a control valve 63 for controlling flow through the first part 62.

The first part 52 and the second part 54 of the first cooling system 50 may recombine upstream of the turbine or may extend to different points on the turbine or to other gas turbine components. Similarly, the first part 62 and the second part 64 of the second cooling system 60 may recombine upstream of the turbine or may extend to different points on the turbine or to other gas turbine components.

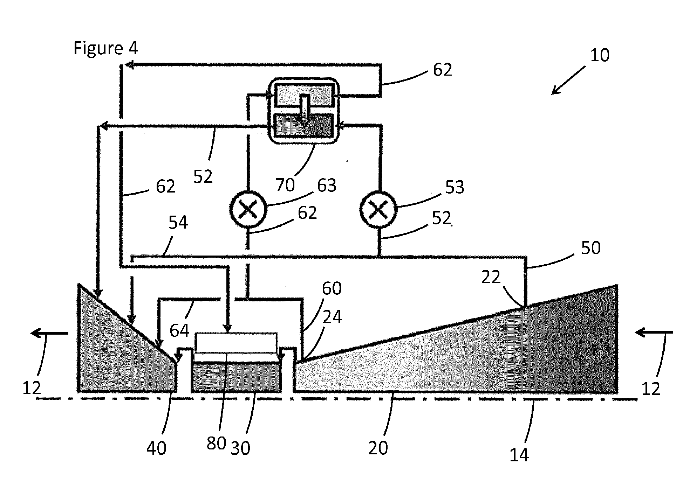

Figure 4 shows a gas turbine similar to Figure 3, and shows one example of where the cooling systems 50, 60 could extend to. Most of the arrangement is as in Figure 3. In addition to this, the first part 52 of the first cooling system 50 extends to the turbine, and the first part 62 of the second cooling system 60 extends to high pressure gas turbine components 80.

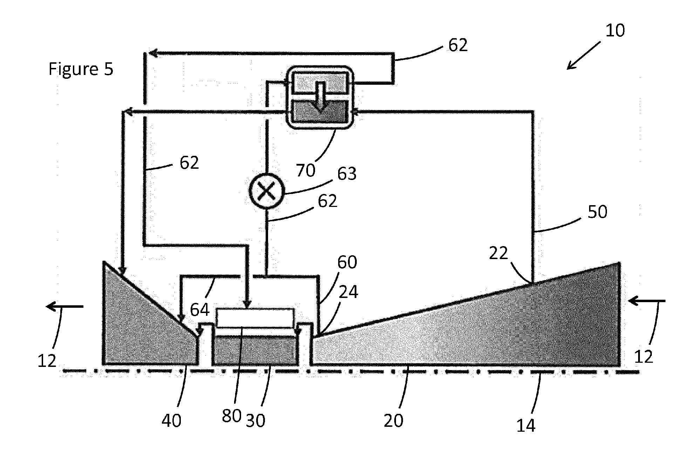

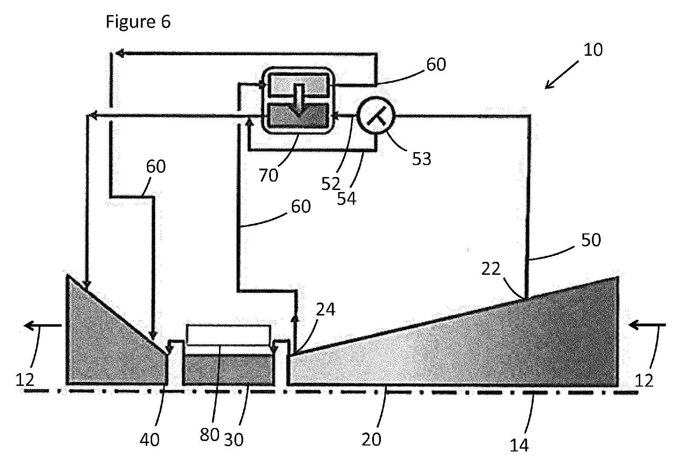

Figure 5 shows another gas turbine, this time with a first cooling system 50 that is not split and a second cooling system 60 that is split into two parts as in Figure 4. Figure 6 shows another gas turbine, this time with a second cooling system 60 that is not split and a first cooling system 50 that is split into two parts as in Figure 4, except that in Figure 6, the first and second parts 52, 54 recombine downstream of the heat exchanger (in the direction of flow of the cooling fluid). Due to the recombination, the second part 54 can be considered as a bypass, bypassing the heat exchanger. A similar bypass could alternatively or additionally be provided on the second cooling system 60.

In Figure 6, the control valve 53 is a three-way valve, whereas in Figures 3 and 4 two-way valves were shown. Other control options are also possible; for example, a three-way valve at the junction between first and second parts 62, 64 could also be used in Figure 5 rather than the two-way valve shown.

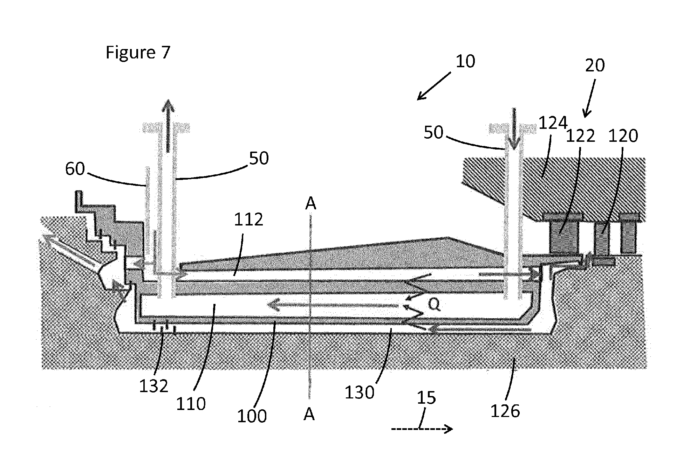

Figure 7 shows an example of a heat exchanger that could be used in Figures 1 to 6. In this case, the heat exchanger is incorporated into a rotor cover 100. The rotor cover 100 extends between the compressor 20 and the turbine 40 (not shown in Figure 7). The first cooling system 50 enters at one end of the rotor cover (the end closest to the compressor in this example) and exits at the other end of the rotor cover (the end closest to the turbine in this example), with the first cooling system 50 comprising a channel 110 in the rotor cover. Similarly, the second cooling system 60 enters at one end of the rotor cover (the end closest to the turbine in this example) and comprises a channel 112 in the rotor cover. The channel 112 leads to a channel 130 between the rotor and the rotor cover, although it may additionally or alternatively lead to a further section of the second cooling system 60 downstream of the rotor cover, to allow cooled high pressure fluid to be supplied to other parts of the gas turbine.

Further details of the gas turbine 10 surrounding the rotor cover are also shown in Figure 7 for context. The compressor 20 contains one or more blades 120 and vanes 122. The vanes are attached to a compressor vane carrier 124 and the blades are attached to a rotor 126. The channel 130 extends between the rotor and the rotor cover, including one or more seals 132. These features are shown as examples and may vary in different gas turbines without changing the core rotor cover design described herein.

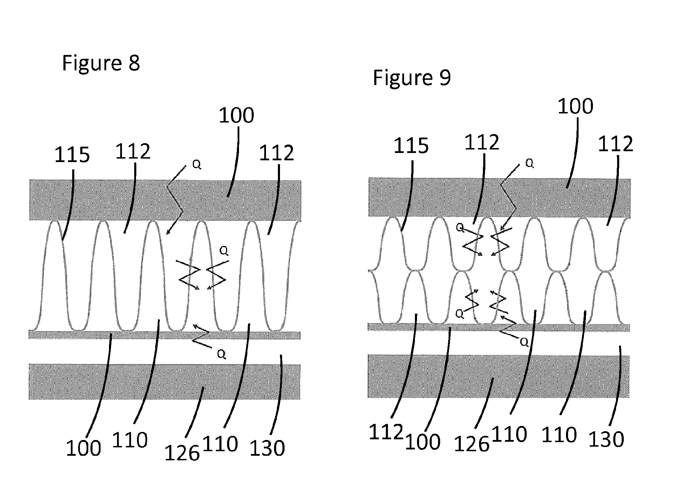

Various heat exchange structures can be provided in the rotor cover, and Figures 8 and 9 show two examples by showing cross-sections along A-A of Figure 7 in two possible arrangements. In the rotor cover 100 the two channels 110, 112 are adjacent to one another with a wall 115 separating them. The wall is a sinusoidal shape in the cross-section shown (a cross-section perpendicular to the direction 15 of the gas turbine axis). Figure 9 shows a second example in which a different arrangement of channels 110, 112 is provided, namely a set of channels 112 on each side of a set of channels 110. Other arrangements are also possible.

During use, a fluid (typically air or a mix of air and recirculated flue gases) enters the compressor 20. It is compressed as it passes through the compressor. Part of the fluid passes from the compressor to the combustor 30, and part of the fluid is extracted from the compressor, for example for use in cooling. In the examples shown in Figures 1 to 6, fluid is extracted at two extraction points (and two different extraction pressures), although three or more extraction points may also be used. The fluid that remains in the compressor is then passed to the combustor, where it is combusted along with a fuel and the combustion products pass to the turbine.

Once the fluid has been extracted from the compressor at the two extraction points, at least some of each of the two extracted fluid flows (through first and second cooling systems 50, 60) is passed to a heat exchanger 70, where heat exchange occurs between the two fluid flows. The two fluid flows then continue to other parts of the gas turbine, such as the compressor and/or the turbine, where they are used as cooling fluid.

Cooling fluid flow rates could be varied at different points during operation, for example by using control valves, to react to different cooling and mechanical integrity requirements. For example, flow rates in the first cooling system relative to flow rates in the second cooling system could be different during gas turbine start-up compared to during steady state operation and during shut down. This variation in flow rates can be used to control the temperatures of the resulting fluid flows downstream of the heat exchanger and therefore to control cooling of gas turbine components. For example, some parts of a gas turbine are subject to stress due to high temperatures or due to rapid increases in temperature during start-up, and cooling fluid flow rates could be altered to decrease the temperature of cooling fluid to such parts, and possibly also to increase flow rates to such parts. Clearances between parts can also be controlled by altering flow rates in this manner, and in some cases it is desirable to increase the heating rate of certain parts during start-up (or reduce the cooling rate during shut down). This can also be achieved by altering the flow rates. As a specific example using the arrangement in Figure 3, an increase of cooling fluid flow through the first part 52 of the first cooling system can decrease the temperature of the cooling fluid flow through the first part 62 of the second cooling system, and thereby increase cooling of parts cooled by the first part of the second cooling system and reduce cooling of parts cooled by the second part of the first cooling system (due to a decrease in cooling fluid flow).

The Figures show general schematic examples, and do not necessarily show the full extent of the cooling systems. For example, the cooling systems in Figure 2 are each shown extending to a single point on the turbine, but the cooling systems could be divided to cool several parts of the turbine and could also extend to cool other parts of the gas turbine. Various combinations of the embodiments of Figures 1 to 6 in particular are also possible.

Before being compressed in the compressor 20, the high pressure and low pressure cooling fluid both have the same origin, namely the fluid fed to the compressor inlet (the upstream end of the compressor in the gas turbine flow direction). As a result of the greater compression of the high pressure fluid relative to the low pressure fluid, the initial temperature of the high pressure fluid in the second cooling system is higher than that of the low pressure fluid in the first cooling system.

In this application, 'high pressure' and 'low pressure' are intended as relative terms, with the high pressure being higher than the low pressure. As an example, the high pressure could be between 20 and 35 atmospheres, and the low pressure could be between 1 and 10 atmospheres. Upstream and downstream are also relative terms, either relative to the gas turbine flow 12 or the flow direction of cooling fluid in the cooling fluid systems when in use.

The first and second compressor extraction points 22, 24 may be at various points in the compressor, with extraction at different points along the length of the compressor (in the direction of the gas turbine flow 12) providing cooling fluid at different pressures. An extraction point 22, 24 may be a single extraction point or multiple extraction points spaced around the circumference of the compressor (relative to the gas turbine axis 14). Similarly, the points where the cooling fluid is fed into parts (components) of the gas turbine at the downstream end of the cooling systems may be split up in various ways to distribute cooling fluid.

Although it is generally preferable not to use an external cooling system with the present invention, an external cooling system such as a once-through cooler can be used to provide further cooling to one or more of the cooling fluid flows, for example the cooling fluid flow through the second cooling system 60 in Figure 2.

The cooling systems 50, 60 are generally cooling pipe systems that comprise pipes along which the cooling flows can be fed, for example using pumps or using natural pressure gradients within the cooling systems. The cooling systems may also comprise other means of transporting a cooling flow, such as channels or ducts within other components, for example channels or ducts within the rotor cover and/or the turbine casing.

Control valves 53, 63 are shown in some of the embodiments, but other control arrangements may also be used, for example to provide additional or alternative control options. For example, in the arrangement shown in Figure 3, the second part 54, 64 of each cooling system can also be provided with a control valve, or a control valve can be provided at the junction between the first 52, 62 and second 54, 64 parts of the cooling systems, similar to the control valve 53 in the first cooling system shown in Figure 6.

The heat exchanger 70 could be either in the gas turbine, such as in the example in Figure 7, or outside the gas turbine. Only one heat exchanger 70 is shown in each of the examples above, but two or more heat exchangers can also be provided. The system is not limited to any particular type of heat exchanger. Two cooling flows are shown in the Figures but three or more could also be extracted, for example a low pressure, an intermediate pressure and a high pressure cooling flow, with part or all of some or all of the extracted flows exchanging heat in one or more heat exchangers. In one example, the intermediate pressure cooling flow does not pass through a heat exchanger, and the low pressure and high pressure cooling flows pass through a heat exchanger, with the high pressure flow passing heat to the low pressure flow. A heat exchanger in a rotor cover is shown as an example in Figure 7, but other components such as turbine housings, compressor casings or vane carriers could also have a similar heat exchanger incorporated into them. Having the heat exchanger in the gas turbine (i.e. in the structure of the outer casing of the gas turbine or inside the outer casing of the gas turbine) can reduce the amount of space needed for the gas turbine and can also reduce heat loss. Providing the heat exchanger in an existing component or structural part can avoid the need for further components and can also be space efficient.

The high pressure gas turbine components 80 can comprise components in high pressure areas, particularly around the combustor. These components in high pressure areas are typically subject to high temperatures that can potentially limit component lifetime. A cooling fluid source with lower temperatures can alleviate lifetime constraints. Examples include the combustor lining (sequential liner), the rotor or the rotor drum (the part of the rotor that is between the compressor end and the turbine disc, so between the compressor and the turbine), the turbine disc (the portion of the rotor that is surrounded by the turbine section of the gas turbine), the rotor cover, the last stages (the most downstream set or sets of blades/vanes) of the compressor and the first stages (the most upstream set of sets of blades/vanes) of the turbine.

More generally, the Figures show various examples of where cooling fluid from the first and second cooling systems can be directed, either with or without being passed through the heat exchanger. Cooling fluid can also be passed to other parts of the gas turbine, such as the compressor housing and the combustor lining. For example, Figure 3 shows cooling fluid directed to parts of the turbine 40 (for example the turbine vane housing or the vanes), and Figure 4 shows cooling fluid directed to high pressure gas turbine components 80 in the combustor and the area around the combustor. Figure 7 shows cooling fluid passing into the channel 130 between the rotor cover and the rotor, both before (on the side adjacent to the turbine) and after (on the side adjacent to the compressor) passing through the heat exchanger in the rotor cover. In the rotor cover 100, other combinations of flows are possible. For example, the cooling fluid from the first cooling system could enter adjacent to the turbine rather than adjacent to the compressor, and/or the cooling fluid from the second cooling system could enter adjacent to the compressor rather than adjacent to the turbine.

The rotor cover may have various names, such as mid-section structural part, rotor wrapper, turbine vane inner diameter support structure, or compressor end diffuser structure. The rotor cover may be part of a larger component, such as a combustor carrier or a compressor vane carrier. The rotor cover 100 typically extends around the rotor 126 between the compressor 20 and the turbine 40. The rotor cover may be modularised, with one or more of the modules containing a heat exchanger or heat exchangers, and one or more modules not containing a heat exchanger or heat exchangers.

Different structures of heat exchanger within the rotor cover are possible; for example, the passages 110 and 112 may take various shapes beyond those shown in Figures 8 and 9. The wall 115 may also take a variety of shapes, but is generally designed to maximise surface area and maximise heat transfer from channel 112 to channel 110, while still keeping the flow in the channels 110, 112 separate.

Various modifications to the embodiments described are possible and will occur to those skilled in the art without departing from the invention which is defined by the following claims.

### REFERENCE NUMERALS

| | | | |
|---|---|---|---|
| 10 | gas turbine | 64 | second part of the second cooling system |
| 12 | gas turbine flow | | |
| 14 | gas turbine axis | 70 | heat exchanger |
| 15 | gas turbine axis direction | 80 | high pressure gas turbine components |
| 20 | compressor | | |
| 22 | first compressor extraction point | 100 | rotor cover |
| | | 110 | channel of the first cooling system 50 |
| 24 | second compressor extraction point | | |
| | | 112 | channel of the second cooling system 60 |
| 30 | combustor | | |
| 40 | turbine | 115 | wall |
| 50 | first cooling system | 120 | blade |
| 52 | first part of the first cooling system | 122 | vane |
| | | 124 | compressor vane carrier |
| 53 | control valve | 126 | rotor |
| 54 | second part of the first cooling system | 130 | channel between the rotor and rotor cover |
| 60 | second cooling system | 132 | seal |
| 62 | first part of the second cooling system | Q | heat |
| 63 | control valve | | |

## Claims

1. A gas turbine (10) comprising a compressor (20), a combustor (30) downstream of the compressor, a turbine (40) downstream of the combustor, a heat exchanger (70), a first cooling fluid system (50) and a second cooling fluid system (60),
the first cooling fluid system and the second cooling fluid system each being configured and arranged to extract a cooling fluid from the compressor and to cool a part of the gas turbine using the cooling fluid, the first cooling fluid system and the second cooling fluid system each extending from the compressor to the heat exchanger and from the heat exchanger to the part of the gas turbine to be cooled, and
wherein the heat exchanger is configured and arranged to exchange heat from the cooling fluid in the second cooling fluid system to the cooling fluid in the first cooling fluid system.

2. The gas turbine (10) of claim 1, wherein at least one of the first cooling fluid system (50) and the second cooling fluid system (60) is divided into two parts (52, 54, 62, 64) upstream of the heat exchanger (70), with one of the parts (52, 62) configured and arranged to pass cooling fluid through the heat exchanger and the other of the parts (54, 64) configured and arranged to bypass cooling fluid past the heat exchanger.

3. The gas turbine (10) of claim 2, wherein the two parts (52, 54, 62, 64) recombine downstream of the heat exchanger.

4. The gas turbine (10) of any of claims 1 to 3, wherein at least one of the first cooling fluid system (50) and the second cooling fluid system (60) is divided downstream of the heat exchanger (70).

5. The gas turbine (10) of any of claims 1 to 4, wherein the heat exchanger (70) is in the gas turbine.

6. A rotor cover (100) for a gas turbine (10), the rotor cover comprising a heat exchanger,
the heat exchanger comprising a first channel (110) for a first cooling fluid flow and a second channel (112) for a second cooling fluid flow and being configured and arranged to transfer heat from the second cooling fluid flow to the first cooling fluid flow.

7. A gas turbine (10) according to claim 1 comprising a rotor cover (100) according to claim 6.

8. A method of operating a gas turbine comprising a compressor (20), a combustor (30) downstream of the compressor, a turbine (40) downstream of the combustor, a heat exchanger (70), a first cooling fluid system (50) and a second cooling fluid system (60), the first cooling fluid system and the second cooling fluid system each being configured and arranged to extract a cooling fluid from the compressor and to cool a part of the gas turbine using the cooling fluid, the first cooling fluid system and the second cooling fluid system each extending from the compressor to the heat exchanger and from the heat exchanger to the part of the gas turbine to be cooled, and wherein the heat exchanger is configured and arranged to exchange heat from the cooling fluid in the second cooling fluid system to the cooling fluid in the first cooling fluid system, the method comprising the steps of
extracting a first flow of cooling fluid from a first point (22) in the compressor and feeding at least part of the first flow through the first cooling fluid system to the heat exchanger,
extracting a second flow of cooling fluid from a second point (24) in the compressor and feeding at least part of the second flow through the second cooling fluid system to the heat exchanger, the second flow being at a higher temperature than the first flow,
cooling the second flow in the heat exchanger using the first flow, and
feeding the first flow and the second flow to a part or parts of the gas turbine.

9. The method of claim 8, wherein at least one of the first cooling fluid system (50) and the second cooling fluid system (60) is divided into two parts (52, 54, 62, 64) upstream of the heat exchanger (70), and a part (52, 62) of the cooling fluid is fed through the heat exchanger and another part (54, 64) of the cooling fluid bypasses the heat exchanger.

10. The method of claim 9, wherein the cooling fluid recombines downstream of the heat exchanger (70).

11. The method of claim 9, wherein the relative cooling fluid flow in the two parts (52, 54, 62, 64) is controlled to control the temperature of the cooling fluid downstream of the heat exchanger (70).
